# EUROPÄISCHE PATENTANMELDUNG

(11) **EP 2 412 534 A2**
(43) Veröffentlichungstag der Anmeldung: **01.02.2012**
(21) Anmeldenummer: 11161510.0
(22) Anmeldetag: 07.04.2011
(51) Int. Cl.: B41M 5/00, C09D 11/00

(54) **Verfahren zur Herstellung einer mehrfärbigen Oberfläche auf Glas**

(30) Priorität: 09.04.2010 AT 5732010
(71) Anmelder: Durst Phototechnik Digital Technology GmbH, 9900 Lienz (AT)
(72) Erfinder: Weingartner, Peter, 9991 Dölsach (AT)
(74) Vertreter: Burger, Hannes

(57) **Zusammenfassung**

Die Erfindung betrifft ein Verfahren zur Herstellung einer mehrfärbigen Oberfläche auf einem keramischen Element oder einem Glas durch tropfenförmiges Auftragen von unterschiedlich gefärbten, eine Trägerflüssigkeit enthaltenden, primären keramischen Prozessfarbtinten auf zumindest einen Teil einer Oberfläche des keramischen Elementes oder des Glases, wobei Mischfarben durch Übereinanderdrucken von zumindest zwei primären Prozessfarbtinten hergestellt werden, und anschließendes Einbrennen der aufgetragenen Tintentropfen. Den primären keramischen Prozessfarbtinten wird zumindest ein (photo)oligomerisierbares oder (photo)polymerisierbares Additiv und zugesetzt. Vor dem Überdrucken eines Tintentropfens mit einem weiteren Tintentropfen wird der Tintentropfen zumindest teilweise gehärtet oder dessen Viskosität erhöht.

## Beschreibung

Die Erfindung betrifft ein Verfahren zur Herstellung einer mehrfärbigen Oberfläche auf einem keramischen Element oder einem Glas durch tropfenförmiges Auftragen von unterschiedlich gefärbten, eine Trägerflüssigkeit enthaltenden, primären keramischen Prozessfarbtinten auf zumindest einen Teil einer Oberfläche des keramischen Elementes oder des Glases, wobei Mischfarben durch Übereinanderdrucken von zumindest zwei primären Prozessfarbtinten hergestellt werden, und anschließendes Einbrennen der aufgetragenen Tintentropfen, ein Drucktintensystem bestehend aus mehreren unter-schiedlich gefärbten, primären keramischen Prozessfarbtinten, aus denen durch Über-einanderdrucken von zumindest zwei primären keramischen Prozessfarbtinten Misch-farben herstellbar sind, wobei jede der primären keramischen Prozessfarbtinten zu-mindest ein anorganisches Pigment, eine Fritte, ein Dispergiermittel und eine, insbesondere organische, Trägerflüssigkeit aufweist sowie eine Vorrichtung zur Herstellung einer mehrfärbigen Oberfläche auf einem keramischen Element oder einem Glas durch tropfenförmiges Auftragen von unterschiedlich gefärbten, primären keramischen Prozessfarbtinten auf zumindest einen Teil einer Oberfläche des keramischen Elementes oder des Glases, wobei Mischfarben durch Übereinanderdrucken von zumindest zwei primären Prozessfarbtinten hergestellt werden, umfassend mehrere Austragelemente für die Prozessfarbtinten und eine Stützeinrichtung zur Ablage des keramischen Elements oder des Glases während des Auftragens der Prozessfarbtinten.

Die Ansprüche an dekoratives Glas an Fassaden sind aufgrund von Sonneneinstrahlung und Langlebigkeit besonders hoch. Dies wurde in der Vergangenheit großteils mit einge-färbtem Glas gelöst bzw. durch ein Siebdruckverfahren mittels keramischer Tinten.

Das Siebdruckverfahren weist den Nachteil auf, dass nach Auftragung einer Farbe und vor Auftragung der nächsten Farbe, die dann eine Mischfarbe ergibt, die zuerst aufge-tragene Farbe in einem Durchlaufofen zur Gänze getrocknet (getempert) werden muss, um die nachfolgende Farbe verinnungsfrei auftragen zu können. Der Siebdruck hat außerdem den Nachteil, dass für jede Farbe und jedes Dekor ein eigenes Sieb erstellt werden muss. Zudem haben Siebdruckfarben den Nachteil, vollständig deckend und nicht transparent zu sein.

Die US 6,336,723 B1 beschreibt ein Verfahren zum Herstellen von Glassubstraten mit Motiven auf Farbbasis. Dabei wird das gewünschte Motiv ausgehend von einer Vorlage, die aus beliebigen Farben auf einem beliebigen Träger hergestellt und mittels Bildver-arbeitung elektronisch bereitgestellt wird, mit einem Tintenstrahldrucker mit vier Farben auf das Glas aufgedruckt und die Farben danach eingebrannt. Als Farben werden zum Einbrennen auf Glas bei etwa 500 °C bis 700 °C geeignete, handelsübliche Einbrenn-farben mit anorganischen Pigmenten verwendet. Diese werden mit einem Verdünnungs-mittel so weit verdünnt, dass der Farbauftrag mit Tintenstrahldruckern möglich ist. Nach dem Drucken und vor dem Einbrennen werden die Glasscheiben solange in horizontaler Lage gelagert, bis der Farbauftrag weitgehend getrocknet ist.

Die Aufgabe vorliegender Erfindung besteht darin, eine verbesserte Möglichkeit für die Erstellung einer färbigen Glasoberfläche aus wenigen Prozessfarben zu schaffen.

Diese Aufgabe der Erfindung wird jeweils eigenständig dadurch gelöst, dass nach dem eingangs genannten Verfahren den primären keramischen Prozessfarbtinten zumindest ein (photo)oligomerisierbares oder (photo)polymerisierbares Additiv und gegebenenfalls zumindest ein Photoinitiator zugesetzt und vor dem Überdrucken eines Tintentropfens mit einem weiteren Tintentropfen der Tintentropfen zumindest teilweise gehärtet wird und/oder dass das nach dem Auftragen eines Tintentropfens einer Prozessfarbtinte und bevor auf diesen Tintentropfen ein weiterer Tintentropfen einer Prozessfarbtinte aufge-tragen wird, die Viskosität des davor aufgetragenen Tintentropfens erhöht wird, dass bei dem eingangs genannten Drucktintensystem jede der primären keramischen Prozess-farbtinten zumindest ein (photo)oligomerisierbares oder (photo)polymerisierbares Additiv und gegebenenfalls zumindest einen Photoinitiator enthält und dass bei der eingangs genannten Vorrichtung am oder benachbart zu den oder zu einer Gruppe von Austrag-elementen eine Lichtquelle angeordnet ist und/oder dass die Austragelemente in mehreren Druckköpfen angeordnet sind und zwischen den Druckköpfen eine Heizeinrichtung angeordnet ist.

Von Vorteil ist dabei, dass die einzelnen Tintentropfen nach dem Auftrag auf die jeweilige Oberfläche fixiert werden, bevor dieser Tropfen mit dem nächsten Tintentropfen über-druckt wird. Es wird damit erreicht, dass die einzelnen Tintentropfen nicht auseinander fließen, wodurch die Bildschärfe deutlich erhöht und die Farbgenauigkeit verbessert werden kann, indem lediglich die gewünschten Mischfarben erzeugt werden und Mischfarben, die aufgrund des Zerfließens der Tintentropfen und des teilweise Ver-mischens mit Nachbartropfen entstehen könnten, verhindert werden. Von Vorteil ist dabei weiters, dass zwar die Viskosität des Tintentropfens so weit erhöht wird, dass das Aus-einderlaufen vermieden wird, aber der Tintentropfen nach wie vor eine gewisse Rest-fluidität behält, die es ermöglicht, dass der auf diesen Tintentropfen aufgetragene weitere Tintentropfen sich mit diesem zumindest teilweise vermischt, insbesondere da durch diesen auch wieder Trägerflüssigkeit in den Bereich des Tintentropfens eingetragen wird, und damit die Mischfarbausbildung erleichtert bzw. unterstützt wird.

Das (photo)oligomerisierbare oder (photo)polymerisierbare Additiv des Tintentropfens kann vor dem Auftragen eines weiteren Tintentropfens darauf insbesondere nur teilweise oligo- bzw. polymerisiert werden, bevorzugt wenn auch ein Teil der Trägerflüssigkeit entfernt wird, um die Viskosität des Tintentropfens zu erhöhen. Von Vorteil ist dabei, dass die chemische Reaktion relativ schnell abläuft, wodurch die Fixierung des Tintentropfens rasch erfolgt, wobei jedoch durch die Vermeidung der vollständigen Reaktion bzw. durch die Kontrolle der Beimischungsmenge des Additivs die gewünschte Restfluidität des Tintentropfens erhalten bleibt. Insbesondere ist die Oligomerisation bzw. Polymerisation in Hinblick auf die sehr kleinen Tintentropfen besser steuerbar, da der Energieeintrag zur Oligomerisation bzw. Polymerisation z.B. mittels Lichtleiter punktgenau erfolgen kann.

Aus den eben genannten Gründen ist es von Vorteil, wenn das (photo)oligomerisierbare oder (photo)polymerisierbare Additiv bis zum einem Ausmaß von maximal 90 %, insbesondere maximal 80 %, vorzugsweise maximal 70 %, oligo- bzw. polymerisiert wird.

Es ist andererseits aus den voranstehenden Gründen vorgesehen, dass ein Anteil der Trägerflüssigkeit von maximal 20 %, insbesondere maximal 25 %, vorzugsweise maximal 30 %, bezogen auf den Gesamtanteil der Trägerflüssigkeit an dem Tintentropfen, entfernt wird, bevor der nächste Tintentropfen auf diesen Tropfen aufgetragen wird.

Eine einfache und kostengünstige Möglichkeit wird erreicht, wenn eine oligomerisierbare oder polymerisierbare Trägerflüssigkeit verwendet wird, die in diesem Fall das voran-stehend genannte Additiv bildet, und diese nach dem Auftragen eines Tintentropfens in dem Tintentropfen oligomerisiert oder polymerisiert wird. Die Oligomerisierung bzw. Polymerisierung kann dabei durch verschiedene Mechanismen erfolgen, beispielsweise mit Hilfe von elektromagnetischer Strahlung, durch Temperatureinwirkung, wobei in diesem Fall gleichzeitig ein Anteil der Trägerflüssigkeit verdampft werden kann, durch Reaktion mit der Luftfeuchtigkeit, etc.

Gemäß einer Ausführungsvariante des Verfahrens ist vorgesehen, dass das keramische Element oder das Glas in einem einzigen Durchgang durch eine Druckvorrichtung be-druckt wird, wobei in der Druckvorrichtung mehrere Austragelemente für jeweils eine der primären keramischen Prozessfarbtinten hintereinander - in Vorschubrichtung des keramischen Elementes bzw. des Glases betrachtet - angeordnet werden, und wobei eine Trägerflüssigkeit der primären keramischen Prozessfarbtinten aus den aufge-brachten Tintentropfen zumindest teilweise entfernt wird, bevor auf die selbe Stelle ein weiterer Tintentropfen aufgebracht wird. Es wird damit die Fixierung der einzelnen Tintentropfen verbessert, indem die Viskosität der Tintentropfen nach dem Auftrag auf die Oberfläche erhöht wird, sodass die Bedruckung des Substrates auch im so genannten single pass Verfahren durchgeführt werden kann, wodurch die Effizienz des Verfahrens erhöht werden kann, selbst wenn lediglich Klein- oder Kleinstserien gefertigt werden.

In der bevorzugten Ausführung der Vorrichtung ist dazu zwischen den Druckköpfen eine Heizeinrichtung angeordnet.

Die Verflüchtigung der Trägerflüssigkeit kann unterstützt werden, indem für zumindest zwei der primären keramischen Prozessfarbtinten jeweils eine Trägerflüssigkeit verwendet wird, die bei unterschiedlichen Temperaturen verflüchtigbar sind. Dabei ist es von Vorteil, wenn die Trägerflüssigkeit mit dem höheren Siedepunkt, also jene Trägerflüssigkeit, die bei einer höheren Temperatur verflüchtigbar ist (in Relation zu der weiteren Träger-flüssigkeit betrachtet) jener Prozessfarbtinte zugesetzt wird, die zuerst auf die Oberfläche des Substrates aufgetragen wird, da in diesem Fall der erste Tropfen zwar noch aus-reichend fixiert ist, allerdings wegen der späteren zumindest teilweisen Verflüchtigung der Trägerflüssigkeit sich der weitere auf diesen Tintentropfen aufgedruckte Tintentropfen mit dem ersten Tintentropfen noch in gewissem Ausmaß vermischen kann, wodurch die spätere Ausbildung der Mischfarbe unterstützt wird. Zudem durchläuft der erste Tinten-tropfen in Vorschubrichtung eine längere Wegstrecke, über die die Verflüchtigung der Trägerflüssigkeit mit dem höheren Siedepunkt weiter fortgesetzt wird, sodass beim auf den Druck anschließenden Einbrennen der Farben eine Bläschenbildung in der Farb-oberfläche vermieden wird. Aus diesem Grund ist es auch von Vorteil, wenn die zuletzt aufgetragen Farbtinte eine Trägerflüssigkeit mit niedrigerem Siedepunkt aufweist. In der bevorzugten Ausführung weisen die hintereinander aufgebrachten Tinten (in Vorschub-richtung des Substrates betrachtet) Trägerflüssigkeiten auf, deren Siedepunkte abnehmen.

Das Drucktintensystem kann dazu derart ausgestaltet sein, dass die Trägerflüssigkeiten von zumindest zwei primären keramischen Prozessfarbtinten einen zueinander unterschiedlichen Siedepunkt aufweisen.

Gemäß einer Variante zu diesem Verfahren ist vorgesehen, dass eine Trägerflüssigkeit verwendet wird, die aus einem Gemisch aus Flüssigkeiten mit unterschiedlichen Siedepunkten besteht. Es wird damit ebenfalls erreicht, dass die Viskosität der Drucktinten nach dem Auftrag durch Entfernung eines Anteils der Trägerflüssigkeit erhöht wird, wodurch die Fixierung der Farbtropfen unterstützt wird. Über die Strecke des Vorschubes des Substrates während des Bedruckens wird ermöglicht, dass auch die höher siedenden Bestandteile der Trägerflüssigkeit zumindest anteilsweise entfernt werden, wodurch ebenfalls der Bläschenbildung vorgebeugt werden kann. Gleichzeitig kann aber im Bereich eines Tintentropfens durch den noch vorhandenen Trägerflüssigkeitsanteil eine gewisse Vermischung mit den weiteren auf diesen Tintentropfen aufgebrachten Tintentropfen erreicht werden, ohne dass der bzw. die Tintentropfen mit den Nachbartropfen verfließen.

Das Drucktintensystem kann dazu derart ausgestaltet sein, dass die Trägerflüssigkeiten der primären keramischen Prozessfarbtinten aus einem Gemisch aus Flüssigkeiten mit unterschiedlichen Siedepunkten bestehen.

Besonders bevorzugt wird das Verfahren derart durchgeführt, dass das keramische Element oder das Glas mit einem Tintenstrahldrucker bedruckt wird, wozu die erfindungs-gemäße Vorrichtung als Tintenstrahldrucker ausgebildet ist.

Gemäß einer Ausführungsvariante des Drucktintensystems ist vorgesehen, dass der Gesamtanteil an (photo)oligomerisierbaren oder (photo)polymerisierbaren Additiven an der jeweiligen primären keramischen Prozessfarbtinte ausgewählt ist aus einem Bereich mit einer unteren Grenze von 5 Gew.-% und einer oberen Grenze von 70 Gew.-%. Mit einem Anteil an (photo)oligomerisierbaren oder (photo)polymerisierbaren Additiven unterhalb von 5 Gew.-°7o konnte zwar eine Fixierung der Tintentropfen erreicht werden, allerdings zeigte sich, dass die Qualität des Druckes ab der angegebenen unteren Grenze deutlich besser wird. Oberhalb der angegeben Grenze wurde beobachtet, dass die einzelnen Tropfen zu hart werden, wodurch der spätere Mischvorgang während des Brennens zur Erzielung der Mischfarben gestört wird.

Es ist dabei im Rahmen der Erfindung möglich, dass der Gesamtanteil an (photo)oligomerisierbaren oder (photo)polymerisierbaren Additiven an der jeweiligen primären keramischen Prozessfarbtinte ausgewählt ist aus einem Bereich mit einer unteren Grenze von 5 Gew.-% und einer oberen Grenze von 40 Gew.-%, bzw. aus einem Bereich mit einer unteren Grenze von 10 Gew.-% und einer oberen Grenze von 25 Gew.-%. Es werden damit die voranstehend genannten Effekte weiter verbessert.

Gemäß einer anderen Ausführungsvariante des Drucktintensystems ist aus den selben, eben geschilderten Gründen der Gesamtanteil an Photoinitiatoren an der jeweiligen primären keramischen Prozessfarbtinte ausgewählt ist aus einem Bereich mit einer unteren Grenze von 0,5 Gew.-°7o und einer oberen Grenze von 20 Gew.-%.

Es ist dabei im Rahmen der Erfindung möglich, dass der Gesamtanteil an Photoinitiatoren an der jeweiligen primären keramischen Prozessfarbtinte ausgewählt ist aus einem Bereich mit einer unteren Grenze von 1 Gew.-% und einer oberen Grenze von 10 Gew.-%, bzw. aus einem Bereich mit einer unteren Grenze von 3 Gew.-% und einer oberen Grenze von 7 Gew.-%. Es werden damit die voranstehend genannten Effekte weiter verbessert.

Der Begriff "Photoinitiator" umfasst im Rahmen der Erfindung auch IR-Initiatoren, wobei es in diesem Fall von Vorteil ist, wenn der Anteil des oder der IR-Initiators/en ausgewählt ist aus einem Bereich mit einer unteren Grenze von 0,5 Gew.-% und einer oberen Grenze von 15 Gew.-%

Zur leichteren Verflüchtigung der Trägerflüssigkeit ist der Anteil der Trägerflüssigkeit an den primären keramischen Prozessfarbtinten ausgewählt ist aus einem Bereich mit einer unteren Grenze von 30 Gew.-% und einer oberen Grenze von 90 Gew.-%, bzw. bevorzugt aus einem Bereich mit einer unteren Grenze von 40 Gew.-% und einer oberen Grenze von 80 Gew.-%, insbesondere aus einem Bereich mit einer unteren Grenze von 60 Gew.-% und einer oberen Grenze von 80 Gew.-%.

Nach einer anderen Ausführungsvariante des Drucktintensystems ist vorgesehen, dass zumindest zwei der primären keramischen Prozessfarbtinten einen unterschiedlichen Anteil an Trägerflüssigkeit aufweisen. Insbesondere ist der Anteil Trägerflüssigkeit in der später aufgebrachten Drucktinte geringer. Auch durch diese Maßnahme wird erreicht, dass der Anteil der Trägerflüssigkeit während des Druckvorganges selbst so weit reduziert wird, dass einer Bläschenbildung während des Einbrennens der Farben vorgebeugt wird. Bevorzugt weist die zuletzt aufgebrachte Tinte den geringsten Anteil an Trägerflüssigkeit auf, jene die zuerst aufgebracht wird, den höchsten Anteil. Dazwischen aufgetragene Drucktinten weisen einen geringeren Anteil an Trägerflüssigkeit auf, als die jeweils unmittelbar davor aufgebrachte Drucktinte.

Zum besseren Verständnis der Erfindung wird diese anhand der nachfolgenden Figuren näher erläutert.

Es zeigen in schematisch vereinfachter Darstellung:
- Fig. 1: eine Ausführungsvariante einer erfindungsgemäßen Vorrichtung in Form einer Tintenstrahldruckvorrichtung;
- Fig. 2: die Unterseite einer Druckkopfanordnung mit darin angeordneten Druckköpfen;
- Fig. 3: ein Detail eines Druckkopfes im Bereich der Austragelemente in Seitenansicht geschnitten.

Einführend sei festgehalten, dass in der Beschreibung gewählte Lageangaben, wie z.B. oben, unten, seitlich usw. auf die unmittelbar beschriebene sowie dargestellte Figur bezogen und bei einer Lageänderung sinngemäß auf die neue Lage zu übertragen sind. Weiters können auch Einzelmerkmale oder Merkmalskombinationen aus den gezeigten und beschriebenen Ausführungsbeispielen für sich eigenständige, erfinderische oder erfindungsgemäße Lösungen darstellen.

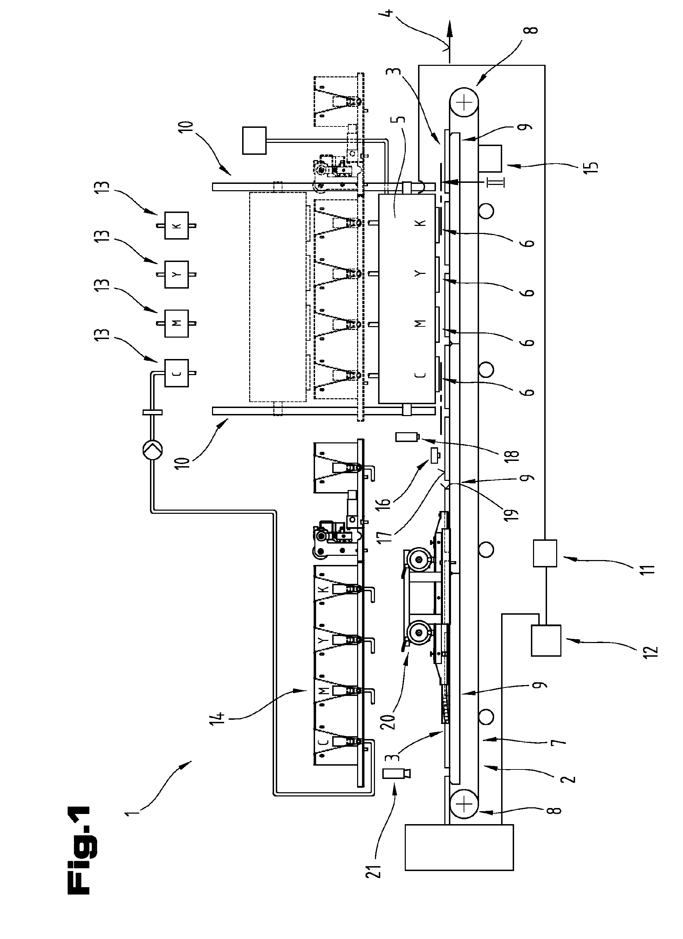

Fig. 1 zeigt eine Übersichtdarstellung der Vorrichtung 1 in Form eines Tintenstrahldruckers mit schematisch und vereinfacht dargestellten Einzelbestandteilen.

Die Vorrichtung 1 weist eine im Wesentlichen horizontal angeordnete Transporteinrichtung 2 zum Bewegen von darauf liegenden zu bedruckenden Druckteilen 3 in einer Vorschubrichtung 4 (in Fig. 1 von links nach rechts) auf. Über der Transporteinrichtung 2 befindet sich eine Druckkopfanordnung 5 mit Druckköpfen 6, durch die die darunter vorbeibewegten Druckteile 3 mit Tinte bedruckt werden.

Die Transporteinrichtung 2 wird vorzugsweise durch ein endloses Förderband 7 gebildet, das über zumindest zwei Umlenkrollen 8 geführt bzw. zumindest eine Umlenkrolle 8 angetrieben wird. Der in Vorschubrichtung 4 bewegte obere Abschnitt des Förderbandes 7 wird durch über eine oder mehrere Führungsplatten 9 an seiner Unterseite gestützt. Indem das Förderband 7 über die horizontal und fluchtend ausgerichteten Führungsplatten 9 gleitend gezogen wird, wird eine entsprechend gleichmäßige horizontale Bewegung der Druckteile 3 in Vorschubrichtung 4 erreicht.

Die Druckkopfanordnung 5 weist zu jeder Farbe eine Mehrzahl von Druckköpfen 6 auf, sodass bevorzugt die gesamte Breite des Druckmediums bzw. der Druckteile auf einmal bedruckt werden kann, ohne dass sich die Druckkopfanordnung 5 in bezüglich der Vorschubrichtung 4 seitlicher Richtung bewegen muss. D.h. die Druckkopfanordnung 5 ist in seitlicher Richtung feststehend angeordnet. Durch vertikal ausgerichtete Führungen 10 kann die Druckkopfanordnung 5 in Richtung auf das Förderband 7 abgesenkt bzw. durch Anheben von diesen entfernt werden.

Zur Ansteuerung der Druckköpfe 6 der Druckkopfanordnung 5 werden die Bilddaten eines zu druckenden Motivs durch einen Bildrechner 11 in Steuersignale für die Druckköpfe 6 umgewandelt. Zur Steuerung der gesamten Tintenstrahldruckvorrichtung ist darüber hinaus eine Steuereinrichtung 12 vorgesehen. Die Steuerungseinrichtung 12 weist eine Software zur Steuerung der Tintenstrahldruckvorrichtung auf, sowie auch der Bildrechner 11 eine Software zur Bilddatenverarbeitung aufweist.

Gemäß diesem Ausführungsbeispiel ist das Drucken von farbigen Motiven mit den Farben Cyan, Magenta, Gelb und Weiß bzw. Schwarz vorgesehen und werden die Druckköpfe 6 bzw. die Druckkopfanordnung 5 aus entsprechenden Tanks 13 mit Tinte versorgt.

Die Vorrichtung 1 kann weiters eine Düsenspüleinrichtung 14 aufweisen, die nach Anheben der Druckkopfanordnung 5 aus einer Parkposition unter die Druckkopfanordnung 5 verschoben werden kann (strichliert eingezeichnet). Zum Lösen eventuell vorliegender Verstopfungen von Düsen der Druckköpfe 6 kann damit durch alle Düsen Tinte gepresst, die durch die Düsenspüleinrichtung 14 aufgefangen wird.

Vorzugsweise im Bereich des unteren Abschnittes des Förderbandes 7 der entgegen der Vorschubrichtung 4 bewegt wird, kann eine Reinigungseinrichtung 15 zur Reinigung des Förderbandes 7 angeordnet sein. Damit können Tintenreste, die auf das Förderband 7 gelangt sind, entfernt werden. Die Reinigung mit der Reinigungseinrichtung 15 kann beispielsweise durch Abstreifen bzw. Absaugen noch nicht eingetrockneter Tintenreste erfolgen. Die Reinigungswirkung kann zusätzlich unterstützt werden, indem das Förderband mit einem Reinigungsmittel besprüht wird und dadurch eingetrocknete Tintenreste gelöst werden.

Durch einen Sensor 16 kann die vertikale Lage einer Oberseite 17 des Druckteiles 3 bzw. die Dicke des Druckteiles 3 detektiert werden, sodass durch die Steuervorrichtung 12 die vertikale Position der Druckkopfanordnung 5 bzw. der Abstand der Druckkopfanordnung 5 von der Oberseite 17 des Druckteiles 3 automatisch eingestellt werden kann. Ein weiterer Sensor 18 der ebenfalls am eingangsseitigen Bereich der Transporteinrichtung 2 der Druckkopfanordnung 5 vorgeordnet sein kann, kann vorgesehen werden, um eine Vorderkante 19 eines Druckteiles 3 zu detektieren, sodass der Druckvorgang der Druckkopfanordnung 5 zeitgerecht gestartet werden kann.

Im Eingangsbereich der Transporteinrichtung 2 kann sich außerdem eine Einrichtung 20 zur Lagekorrektur der Druckteile 3 befinden, durch die Druckteile 3 auf dem Förderband 7 in eine definierte Lage gebracht werden können. Alternativ dazu kann auch eine Kamera 21 vorgesehen sein, durch die in Verbindung mit einer automatischen Bilderkennung die Lage als auch die Ausrichtung des auf das Förderband 7 liegenden Druckteiles 3 detektiert wird und diese Information bei der Berechnung der Bilddaten durch den Bildrechner 11 berücksichtigt wird.

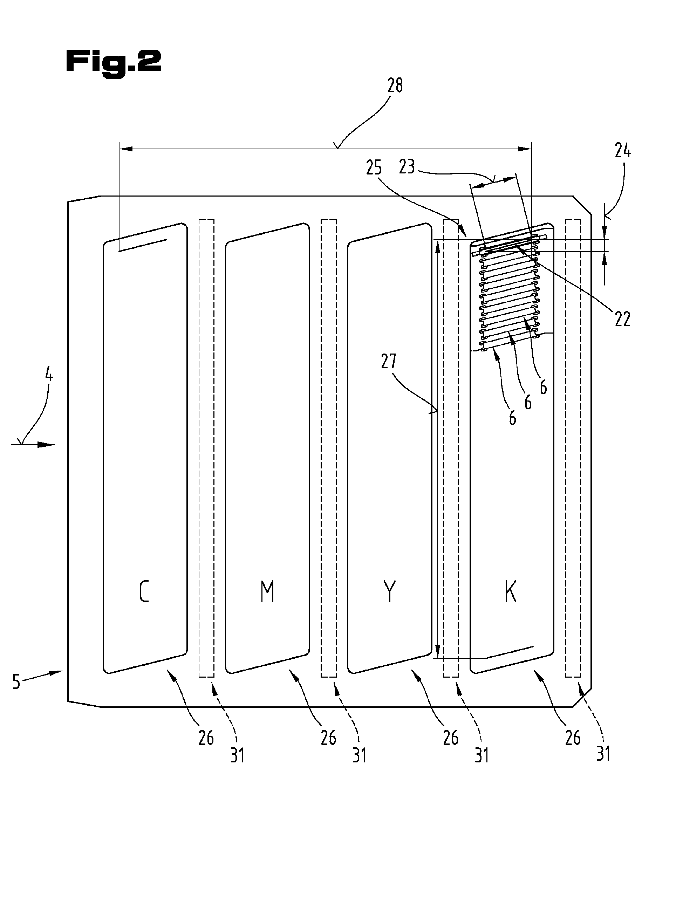

Die Fig. 2 zeigt die Unterseite der Druckkopfanordnung 5 gemäß Fig. 1, mit den darin angeordneten Druckköpfen 6.

Jeder der Druckköpfe 6 weist eine durch einen Vielzahl nebeneinander liegender und linear ausgerichteter Düsen gebildete Düsenreihe 22 mit einer Düsenreihenlänge 23 auf. Die Druckköpfe 6 bzw. deren Düsenreihen 22 sind bezüglich der Vorschubrichtung 4 schräg bzw. geneigt angeordnet, sodass jede der Düsenreihen 22 eine senkrecht bezüglich der Vorschubrichtung 4 gemessene Druckbereichbreite 24 der Düsenreihe 22 aufweist, die kleiner ist, als die Düsenreihenlängen 23. Damit kann durch Verwendung von Druckköpfen 6 mit einer niedrigen Auflösung bzw. einer geringen Dichte von Düsen in der Düsenreihe 22 eine wesentlich höhere Auflösung bezüglich der zur Vorschubrichtung 4 senkechten Richtung erreicht werden.

Ohne Einschränkung der Allgemeinheit sind in der beschriebenen Ausführungsform jeweils neun Druckköpfe 6 zu einem Druckkopfmodul 25 zusammengesetzt (aus Gründen der Übersichtlichkeit, ist in Fig. 2 nur ein solches Druckkopfmodul 25 dargestellt). Mehrere solcher Druckkopfmodule 25 (in der beschriebenen Ausführungsform vier Druckkopfmodule 25) bilden gemeinsam eine Druckkopfreihe 26 zum Drucken jeweils einer der zu druckenden Farben. Die Druckköpfe 6 sind dabei so angeordnet, dass die Druckbereichsbreiten 24 der Düsenreihen 22 zweier benachbarter Düsenreihen 22 lückenlos aneinander anschließen, sodass sich eine gesamte Druckbereichsbreite 27 der Druckkopfreihe 26 entsprechend der Anzahl der Druckköpfe 6 ergibt.

Für jede der zu druckenden Farben ist eine Druckkopfreihe 26 vorgesehen. Gemäß diesem Ausführungsbeispiel sind für Druckkopfreihen 26 bezüglich der Vorschubrichtung 4 hintereinander angeordnet und erstrecken sich die Düsen der Druckkopfreihen 26 somit über eine Druckbereichslänge 28.

In der beschriebenen Ausführungsform werden vorzugsweise Piezo-Inkjet-Druckköpfe für die Druckköpfe 6 verwendet und können damit Druckbereichsbreiten 27 von mehr als 50 cm erreicht werden, wobei Auflösungen im Bereich von 200 bis 800 dpi möglich sind.

Derartige Tintenstrahldrucker für Industrieanwendungen gehören bereits zum Stand der Technik. Beispielsweise ist ein derartiger Tintenstrahldrucker in der WO 2006/084614 A2 der Anmelderin beschrieben, die in diesem Umfang Teil der gegenständlichen Beschreibung ist. Selbstverständlich sind Abänderungen dieser Vorrichtung 1 wie beschrieben möglich. Beispielsweise kann an Stelle der als Förderband beschriebenen Transportvorrichtung 2 lediglich eine Stützeinrichtung zur Ablage des Druckteils 3 bzw. der Druckteile 3 angeordnet sein. Es ist es auch möglich, dass der Druckkopf 6 bzw. die Druckköpfe 6 bzw. die Druckkopfanordnung 5 relativ zum Druckteil 3 über entsprechende Führungseinrichtung verschiebbar gelagert ist. Diese Verschiebbarkeit der Druckkopfanordnung 5 kann in der xy-Ebene in x-Richtung, also in Vorschubrichtung 4 nach Fig. 1, und/oder in y-Richtung, also quer zur Vorschubrichtung 4, ausgebildet sein. In letzterem Fall ist es nicht erforderlich, dass die Druckkopfanordnung 5 sich über die gesamte Breite der Druckteile 3 bzw. der Stützeinrichtung erstreckend ausgebildet ist. Des Weiteren müssen nicht alle Bestandteile der beschriebenen Vorrichtung 1 vorhanden sein. Z.B. kann auf die Düsenspüleinrichtung 14 und/oder die Reinigungseinrichtung 15 bzw. auf die Sensoren 16, 18, etc. verzichtet werden.

Es ist auch möglich, dass mehr als vier Druckköpfe 6 oder Druckkopfanordnungen 5 angeordnet werden um beispielsweise mehr als vier Grundfarben, d.h. mehr als vier Prozessfarbtinten, verarbeiten zu können. Beispielsweise können 5, 6, 7 oder 8 derartige Druckkopfelemente - in Vorschubrichtung 4 betrachtet - angeordnet werden.

Des Weiteren können einzelne Teile der Tintenstrahldruckvorrichtung nach Fig. 1 zusammengefasst werden, beispielsweise der Bildrechner 11 und die Steuereinrichtung 12 ein gemeinsames Bauteil bilden.

Es ist auch nicht zwingend erforderlich, wenngleich vorteilhaft, dass die Düsenreihen schräg zur Vorschubrichtung 4 angeordnet sind.

Weiters kann durch Anordnung einer entsprechenden Anzahl an Düsen auch eine höhere Auflösung als die beschriebene erreicht werden. Ebenso können andere als die beschriebenen Piezo-Inkjet-Druckköpfe verwendet werden, beispielsweise sogenannte Valve-Jet-Antriebe, elektrostatische, thermische, akustische Antriebe etc., zum Austragen der Tintentröpfchen vorgesehen werden.

Erfindungsgemäß ist vorgesehen, dass mit dem Verfahren auf einem keramischen Element oder einem Glas durch tropfenförmiges Auftragen von unterschiedlich gefärbten, eine Trägerflüssigkeit enthaltenden, primären keramischen Prozessfarbtinten auf zumindest einen Teil einer Oberfläche des keramischen Elementes oder des Glases, wobei Mischfarben durch übereinander drucken von zumindest zwei primären Prozessfarbtinten hergestellt werden, und anschließendes Einbrennen der aufgetragenen Tintentropfen, Druckschichten bzw. Farbschichten erzeugt werden.

Unter dem Begriff "Prozessfarbtinte" im Sinne der Erfindung werden Farbtinten verstanden, die lediglich einen Teil des sichtbaren Farbspektrums abdecken, wobei der restliche Teil des sichtbaren Farbspektrums oder zumindest ein Teil hiervon durch Mischen mehrerer, d.h. zumindest zwei, Prozessfarbtinten nach dem Aufdrucken derselben auf das Substrat erzeugt werden. Es handelt sich hierbei also um ein System von Primärfarben, wie beispielsweise Cyan, Magenta, Gelb und Schwarz, wobei auch andere, zusätzliche Primärfarben verwendet werden können, wie z.B. Weiß. Es wird also im Rahmen der Erfindung der jeweilige Mischfarbton nicht durch Vorabmischen von Primärfarben zur Herstellung der Mischfarbe und dem darauf folgenden Auftragen der Mischfarbe auf das keramische Element bzw. das Glas erzeugt.

Das Bedrucken von keramischen Oberflächen oder von Glas erfolgt aus unterschiedlichsten Gründen. Zum einen sind dies rein ästhetische Gründe, wie beispielsweise das Bedrucken dieser Oberflächen mit Motiven, wobei auch Fotos auf diese Oberflächen übertragen werden können, zum anderen können aber auch funktionelle Oberflächen erzeugt werden, beispielsweise Schutzschichten auf Glasoberflächen gegen einfallendes Sonnenlicht, um eine Überwärmung des dahinter liegenden Raums zu vermeiden. Insbesondere sind derartige keramische Elemente oder Glaselemente im Fassadenbau in Verwendung. Es können aber auch andere Verwendungen im Rahmen der Erfindung vorgesehen sein, beispielsweise das Bedrucken von Gläsern für Kfz, etc. Es ist auch nicht zwingend notwendig, dass die Druckteile 3, also die keramischen Elemente oder das Glas, ebenflächig ausgebildet sind, ebenso können gewölbte Oberflächen mit dem erfindungsgemäßen Verfahren bedruckt werden.

Bei bisherigen Verfahren zum Bedrucken von keramischen Oberflächen oder von Glasoberflächen, insbesondere mit Tintenstrahldruckern, bestand das Problem, dass der aufgetragene Farbtropfen aufgrund der glatten Oberfläche des Substrates nach dem Aufdrucken verläuft und damit die Ausbildung von qualitativ hochwertigen Druckbildern erschwert wird. Um dies zu vermeiden, ist es im Rahmen der Erfindung vorgesehen, dass den primären keramischen Prozessfarbtinten zumindest ein (photo)oligomerisierbares oder (photo)polymerisierbares Additiv und ggf. zumindest ein Photoinitiator zugesetzt wird. Bevor auf diesen Farbtropfen ein weiterer Farbtropfen aufgebracht wird, wird der erste Farbtropfen zumindest teilweise gehärtet. Alternativ oder zusätzlich dazu ist es möglich, dass nach dem Auftragen eines Tintentropfens einer Prozessfarbtinte und, bevor auf diesen Tintentropfen zur Bereitstellung der Mischfarben ein weiterer Tintentropfen einer Prozessfarbtinte aufgetragen wird, die Viskosität des davor aufgetragenen Tintentropfens erhöht wird, um damit das Verlaufen des Tintentropfens nach dem Auftragen auf die glatte Oberfläche des keramischen Elementes oder des Glases zumindest weitestgehend zu vermeiden.

Die keramischen Prozessfarbtinten enthalten neben dem (photo)oligomerisierbaren bzw. (photo)polymerisierbaren Additiv dem Stand der Technik entsprechende Zusätze. Üblicherweise bestehen diese aus einem Gemisch aus anorganischen Pigmenten, wie z.B. Metalloxide von Chrom, Eisen, Kupfer, Kobalt, Nickel, Titan, Aluminium, Zink, Chromate, etc., Dispergiermitteln, wie z.B. (Poly)ethylenglykolen und davon abgeleitete Verbindungen, (Poly)propyenglykolen und davon abgeleitete Verbindungen, Glycerin und davon abgeleitete Verbindungen, Fettsäureestern, usw., sowie diversen Hilfsstoffen, wie z.B. Viskositätsreglern, Entschäumern, Tensiden und Zusätzen zur Steuerung der Tropfenform im Inkjet-Prozess. Weiters können z.B. langkettige Kohlenwasserstoffe (z.B. Octacosan, Tetracosan, Pentacosan, Heneicosan, Pentadecan, Decan, usw.), Alkohole (wie z.B. Propandiol, usw.) und andere organische Verbindungen (z.B. Cyclohexanon, Cyclopentanon, Butanon, usw.) Teil der Trägerflüssigkeit sein. Der Anteil an den anorganischen Pigmenten kann ausgewählt sein aus einem Bereich von 5 Gew.-% bis 40 Gew.-%, jener des Dispergiermittels und allfälliger weiterer Trägerflüssigkeiten aus einem Bereich von 30 Gew.-% bis 90 Gew.-%.

Bevorzugt werden die anorganischen Pigmente mit einem Partikeldurchmesser von unter 550 nm, insbesondere unter 400 nm, verarbeitet. Gelegentlich werden auch größere anorganische Pigmente mit Partikeldurchmessern von 1000 nm bis 2000 nm eingesetzt, falls im Zuge einer stärkeren Vermahlung die Farbeigenschaften der Pigmente abgeschwächt werden.

Nachdem die Prozessfarbtinten zur Herstellung der fertigen bedruckten Oberfläche eingebrannt werden und somit im Wesentlichen eine "Glasur" ergeben, enthalten diese Prozessfarbtinten weiters auch so genannte "Fritten", die beispielsweise ein Oxid aus der Gruppe Silizium, Zink, Bismut, Blei, Titan, Zirkonium, Natrium, Kalium, Bor, Lithium, Calzium, Aluminium Zinn, Vanadium, Magnesium, etc., oder Mischungen hiervon umfassen. Der Anteil der Fritte an der Prozessfarbtinte kann ausgewählt sein aus einem Bereich mit einer unteren Grenze von 5 Gew.-% und einer oberen Grenze von 80 Gew.-%, bezogen auf den Feststoffanteil der Prozessfarbtinte.

Ebenfalls können funktionalisierte Fritten zum Einsatz kommen, d.h. z.B. Oxide aus der Gruppe Silizium, Zink, Bismut, Blei, Titan, Zirkonium, Natrium, Kalium, Bor, Lithium, Calzium, Aluminium Zinn, Vanadium, Magnesium, etc., oder Mischungen hiervon, deren Oberflächen mit einer (photo)oligomerisierbaren oder (photo)polymerisierbaren Funktionalität versehen worden sind.

Durch den Zusatz des (photo)oligomerisierbaren oder (photo)polymerisierbaren Additivs wird es möglich, den jeweiligen Tintentropfen durch Kettenverlängerung der Moleküle des Additivs zu fixieren. Das Additiv selbst kann dabei in Form von Monomeren oder bereits in dimerer oder trimerer, etc., Form vorliegen, wobei in letzterem Fall die Fixierung schneller durchgeführt werden kann, da eine größere Kettenlänge in kürzerer Zeit erreichbar ist. Es ist jedoch darauf zu achten, dass die Viskosität der Tinte nicht zu groß wird, damit diese noch mit einem Tintenstrahldrucker verarbeitbar ist.

Es ist allerdings auch möglich zur Verkürzung der Zeit bis zur Fixierung des Tintentropfens auf der Oberfläche des keramischen Elementes oder des Glases der jeweiligen Prozessfarbtinte zumindest einen Photoinitiator oder ein Photoinitiatorgemisch zuzusetzen. Beispiele für Photoinitiatoren sind verschiedene Phenone (z.B. diverse Acetophenone, 2-Hydroxy-2-methylpropiophenon, diverse Benzophenone, usw.), Irgacure®, verschiedene Benzoine, usw., welche aus dem Stand der Technik bekannt sind und von zahlreichen kommerziellen Anbietern bezogen werden können (z.B. Sigma-Aldrich).

Alternativ besteht auch die Möglichkeit, denselben Effekt durch den Zusatz von thermischen Initiatoren oder Gemische daraus zu erzielen. Beispiele für IR-Initiatoren sind Azobisisobutyronitril, 1,1'-Azobis(cyclohexancarbonitril), t-Butyl hydroperoxid, m- Chloroperbenzoesäure, Dibenzoyl peroxid, Di-t-butyl peroxid, usw., welche ebenfalls aus dem Stand der Technik bekannt sind und von kommerziellen Anbietern (z.B. Sigma-Aldrich) bezogen werden können.

Die Initiierung der kettenverlängernden Reaktion des Additivs bzw. zumindest eines Teils des Additivs - das Additiv muss nicht zur Gänze aus dem (photo)oligomerisierbaren bzw. (photo)polymerisierbaren Zusatz bestehen, beispielsweise sind Anteile von 30 Gew.-% bis 90 Gew.-% an dem Additiv durch einen (photo)oligomerisierbaren oder (photo)polymerisierbaren Zusatz gebildet - kann beispielsweise durch Anregung mit elektromagnetischer Strahlung erfolgen. Insbesondere wird die Anregung mit UV-Licht durchgeführt, wobei auch andere Lichtquellen, wie z.B. IR-Lampen, Laser, oder theoretisch auch Elektronenstrahlung bzw. radioaktive Strahlung, wobei letztgenannte beiden Methoden sind im Rahmen der Erfindung nicht die bevorzugten Ausführungsvarianten, da es sich hierbei um Bestrahlungen handelt, die im Bereich von Tintenstrahldruckern eher problematisch zu handhaben sind. Beispiele für UV-Photoinitiatoren sind verschiedene Phenone (z.B. diverse Acetophenone, 2-Hydroxy-2-methylpropiophenon, diverse Benzophenone, usw.), Irgacure®, verschiedene Benzoine, usw., welche aus dem Stand der Technik bekannt sind. Beispiele für IR-Initiatoren sind Azobisisobutyronitril, 1,1'-Azobis(cyclohexancarbonitril), t-Butyl hydroperoxid, m-Chloroperbenzoesäure, Dibenzoylperoxid, Di-t-butyl peroxid, usw., welche ebenfalls aus dem Stand der Technik bekannt sind.

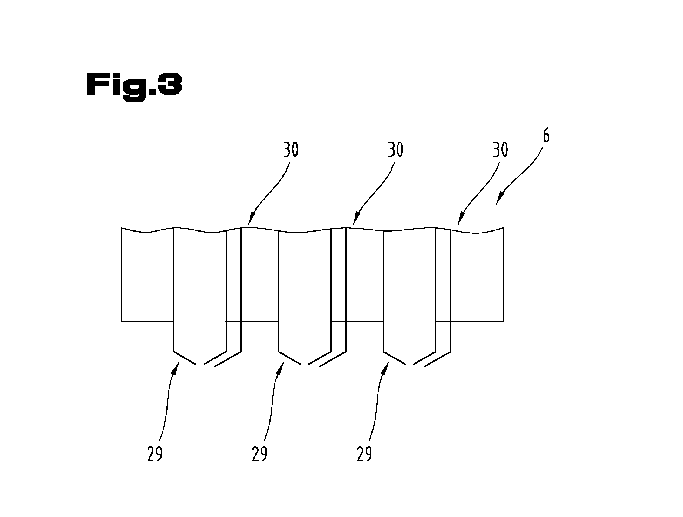

In der bevorzugten Ausführungsvariante der Erfindung wird die elektromagnetische Strahlung wie in Fig. 3 dargestellt zugeführt. Jeder Druckkopf 6 umfasst bekanntlich eine Mehrzahl an Austragelementen 29, beispielsweise in Form von Düsen. Zur Einbringung der elektromagnetischen Strahlung in den Tintentropfen ist vorzugsweise jedem Austragelement 29 eine Lichtquelle 30 zugeordnet, wobei bevorzugt ein unteres Ende der Lichtquelle 30 in Richtung auf eine Austrittsöffnung des Austragselementes 29 weist. Derartige Lichtquellen 30 werden insbesondere durch Lichtleiter gebildet, die mit einer primären Lichtquelle, aus der beispielsweise UV-Licht abgestrahlt wird, verbunden sind.

Es besteht aber auch die Möglichkeit, dass andere Lichtquellen 30 verwendet werden, beispielsweise entsprechende Dioden, die wiederum bevorzugt in unmittelbarer Nähe der Austrittsöffnung der Austrittselemente 29 angeordnet werden. Gegebenenfalls. können auch mehrere Austrittselemente 29 zusammengefasst werden und über eine gemeinsame Lichtquelle 30 verfügen. Des Weiteren ist es möglich, dass, sofern das erfindungsgemäße Verfahren nicht im so genannten single-pass-Durchgang, also mit einmaligen Durchgang des zu bedruckenden Substrates unter den Druckköpfen 6, durchgeführt wird, ein scannender Modus, d.h. mit quer zur Vorschubrichtung 4 verfahrbarem Druckkopf 6, durchgeführt wird, wobei die Lichtquelle 30 ebenfalls quer in der selben Richtung verfahrbar ist und dem Druckkopf 6 folgt.

Es ist aber im Rahmen der Erfindung auch möglich, dass die Oligomerisierung bzw. Polymerisierung der Moleküle des Additivs über andere reaktionsauslösende Faktoren durchgeführt wird, beispielsweise durch Reaktion des Additivs mit der Umgebungsatmosphäre, insbesondere Luftfeuchtigkeit (z.B. durch Sol-Gel-Reaktionen, usw.). Ebenso besteht im Rahmen der Erfindung die Möglichkeit, dass die Moleküle des Additivs bereits eine Photoinitiatorgruppe aufweisen.

Wie bereits erwähnt ist es weiters möglich, dass zur Fixierung des Tintentropfens auf der Substratoberfläche die Viskosität dieses Tintentropfens nach dem Auftragen erhöht wird, bevor ein weiterer Tintentropfen anderer Farbe zur Erzeugung der Mischfarben auf diesen Tintentropfen aufgebracht wird. Dazu kann jedem Druckkopf 6 bzw. jeder Druckkopfreihe 26 eine Heizeinrichtung 31 zugeordnet sein, insbesondere diesem bzw. dieser in Vorschubrichtung 4 nachgeordnet sein, wie dies in Fig. 2 strichliert dargestellt ist, um durch Temperaturerhöhung das teilweise Abdampfen der Trägerflüssigkeit zu erreichen. Es sind also diese Heizeinrichtungen 31 zwischen zwei Druckköpfen 6 bzw. Druckkopfreihen 26 - mit Ausnahme des in Vorschubrichtung 4 letzten Druckkopfes 6 bzw. der letzten Druckkopfreihe 26 - angeordnet. Es besteht jedoch auch die Möglichkeit, dass diese Heizeinrichtungen 31 direkt den Austragelementen 29, wie dies in Fig. 3 dargestellt ist, zugeordnet werden, sodass also jedes Austragelement 29 oder eine Gruppe von Austragelementen 29 über eine derartige Heizeinrichtung 31 verfügt. Die Heizeinrichtung 31 ist zur Abgabe von Wärmestrahlung oder warmer Luft ausgebildet. Beispiele hierfür sind Infrarotlampen, elektrische Heizeinrichtungen, etc. Es ist aber im Rahmen der Erfindung auch möglich, dass die Viskositätserhöhung im Tintentropfen mittels Lufttrocknung durchgeführt wird, beispielsweise in dem ein Luftstrahl über den Tintentropfen geblasen wird, um einen Teil der Trägerflüssigkeit zu verdampfen. In diesem Fall kann auf die Heizeinrichtung 31 verzichtet werden.

Selbstverständlich ist im Rahmen der Erfindung auch eine Kombination der Heizeinrichtung 31 und der Lichtquellen 30 möglich, sodass also beide Elemente in der Druckkopfanordnung 5 vorgesehen werden können. Gegebenenfalls ist es möglich, dass die Heizeinrichtung 31 mit der Lichtquelle 30 kombiniert ist, beispielsweise wenn die Oligomerisierung bzw. Polymerisierung durch Wärme bzw. Temperaturerhöhung ausgelöst wird, sodass auf zusätzliche Lichtquellen 30 verzichtet werden kann, bzw. wenn die Lichtquelle 30 gleichzeitig Wärme abgibt, beispielsweise in Form von Infrarotstrahlung.

Bei sämtlichen Ausführungsvarianten der Erfindung ist vorgesehen, dass die Tintentropfen nicht soweit fixiert werden bzw. deren Viskosität soweit erhöht wird, dass diese zur Gänze fest sind. Die Tintentropfen sollen nämlich eine gewisse Restfluidität behalten, sodass eine Vermischung von aufeinander gedruckten Tintentropfen unterschiedlicher Farben bereits vor dem Einbrennen, das üblicherweise in Temperaturbereich zwischen 400°C und 700°C erfolgt, ermöglicht wird, wodurch der Vorteil erreicht wird, dass homogenere Mischfarben erzeugt werden können. Dazu kann im Rahmen der Erfindung vorgesehen werden, dass das (photo)oligomerisierbare oder (photo)polymerisierbare Additiv lediglich bis zu einem Ausmaß von maximal 90% oligo- oder polymerisiert wird bzw. in dem voranstehend genannten maximalen Ausmaß. Es ist aber andererseits auch möglich, dass lediglich ein Anteil der Trägerflüssigkeit von maximal 20%, bezogen auf den Gesamtanteil der Trägerflüssigkeit an dem Tintentropfen, entfernt wird, bevor der nächste Tintentropfen auf diesen Tropfen aufgebracht wird. Es sei hierzu wiederum auf voran stehend genannte bevorzugte maximale Anteile verwiesen.

Es ist weiters möglich, dass die Trägerflüssigkeit selbst zumindest teilweise das oligomerisierbare oder polymerisierbare Additiv bildet. Beispiele für derartige Trägerflüssigkeiten sind Polypropylenglykoldiacrylat, Epoxy-funktionalisierte Propylen- oder Ethylenglykole, langkettige Kohlenwasserstoffe mit Epoxy- oder (Meth)acrylendgruppen, usw.

Gemäß einer anderen Ausführungsvariante ist vorgesehen, dass die primären Prozessfarbtinten mit unterschiedlichen Trägerflüssigkeiten versehen werden, wobei diese Trägerflüssigkeiten unterschiedliche Siedepunkte aufweisen. Dabei ist es von Vorteil, wenn jene Trägerflüssigkeit, welche den höchsten Siedepunkt von den Trägerflüssigkeiten aufweist, jener keramischen Prozessfarbtinte zugesetzt wird, die, in Vorschubrichtung 4 betrachtet, zuerst aufgetragen wird und die weiteren keramischen Prozessfarbtinten jeweils Trägerflüssigkeiten aufweisen, die jeweils schrittweise niedrigere Siedepunkte aufweisen. Es wird damit erreicht, dass die Trägerflüssigkeiten sich bei unterschiedlichen Temperaturen verflüchtigen bzw. dass der Anteil an Trägerflüssigkeit am zuerst aufgetragenen Tintentropfen über einen längeren Zeitbereich, d.h. über eine längere Strecke, in Vorschubrichtung 4 betrachtet, erhalten bleibt, wodurch die Vermischung mit dem darauf aufgetragenen weiteren Tintentropfen besser durchgeführt werden kann. Über die gesamte Wegstrecke, in Vorschubrichtung 4 betrachtet, durchläuft dieser erste Tintentropfen in der Folge mehrere Heizeinrichtungen 31, sodass also der Anteil der Trägerflüssigkeit an diesem Tintentropfen schrittweise reduziert wird. Bevorzugt erfolgt generell die Reduzierung der Trägerflüssigkeit soweit, dass, nachdem der Druckprozess selbst abgeschlossen ist, der Anteil an Trägerflüssigkeit in der jeweiligen Tintentropfenmischung so gering ist, dass es beim anschließenden Einbrennvorgang zu keiner bzw. zu einer geringfügigen Bläschenbilden kommt, wobei diese Bläschenbildung den Brennvorgang selbst nicht stört und damit keine Lufteinschlüsse in der Druckschicht selbst entstehen.

Es besteht weiters die Möglichkeit, dass die Trägerflüssigkeit aus einem Gemisch von Flüssigkeiten, wie beispielsweise (Poly)ethylenglykolen, (Poly)propylenglykolen, Glycerin, langund kurzkettigen Kohlenwasserstoffen, Alkoholen (Propanol, Butanol, Pentanol, Propandiol, Ethandiol, usw.), Cyclopentanon, Cyclohexanon, Butanon, Essigsäureester, Fettsäureester, Phenoxypropanole, usw., besteht, welche einen unterschiedlichen Siedepunkt aufweisen, wodurch wiederum derselbe Effekt erzielt werden kann.

Bevorzugt ist der Gesamtanteil an (photo)oligomerisierbaren oder (photo)polymerisierbaren Additiven an der jeweiligen primären keramischen Prozessfarbtinte ausgewählt aus einem Bereich mit einer unteren Grenze von 5 Gew.-% und einer oberen Grenze von 70 Gew.-% bzw. aus den voran stehend genannten Bereichen. Der Gesamtanteil an Photoinitiatoren an der jeweiligen primären keramischen Prozessfarbtinte kann ausgewählt sein aus einem Bereich mit einer unteren Grenze von 0,5 Gew.-% und einer oberen Grenze von 20 Gew.-% bzw. den voran stehend genannten Bereichen hierfür.

Der Anteil der Trägerflüssigkeit an der primären keramischen Prozessfarbtinte kann ausgewählt sein aus einem Bereich mit einer unteren Grenze von 30 Gew.-% und einer oberen Grenze von 90 Gew.-% bzw. den voranstehend genannten Bereichen hierfür.

Sofern die primären keramischen Prozessfarbtinten unterschiedliche Anteile an Trägerflüssigkeiten aufweisen kann der Unterschied an Trägerflüssigkeit zwischen 5 % und 60 %, bezogen auf die jeweilige Prozessfarbtinte mit dem höheren Anteil an Trägerflüssigkeit, betragen.

Es ist im Rahmen der Erfindung durchaus ausreichend, wenn die jeweilige Farbschicht, d.h. der jeweilige Tintentropfen lediglich oberflächlich hinsichtlich seiner Viskosität im Sinne der Erfindung verändert wird, da damit eine ausreichende Fixierung des Tintentropfens am jeweiligen Substrat erreicht werden kann. Es kann dabei ein Oberflächenbereich mit einer Schichtdicke von 10 % bis 60 %, bezogen auf den gesamten maximalen Durchmesser des Tintentropfens, hinsichtlich seiner Viskosität, verändert werden.

Während des Einbrennens werden bekanntlich organische Bestandteile verflüchtigt, sodass die jeweiligen Tintentropfen endgehärtet werden.

Es erfolgt also mit dem erfindungsgemäßen Verfahren eine kontrollierte Trocknung jeder aufgebrachten Farbschicht, welche durch die Tintentropfen gebildet wird, während des Druckes selbst, d.h. unmittelbar anschließend an den Druck und bevor die jeweilige Nachfolgefarbe aufgedruckt wird, und nicht erst nach dem Bedrucken der gesamten Fläche mit Farbe.

Die Menge des sich in Stufen verflüchtigenden Trägermittels sowie die Geschwindigkeit der Verflüchtigung und des Abtransportes der damit entstehenden Gase - es können entsprechende Absaugvorrichtungen an der Vorrichtung 1 vorgesehen werden - wird insbesondere so abgestimmt, dass beim nachfolgenden Einbrennvorgang die Bildung von Bläschen als Folge der noch residual vorhandene flüchtigen Trägermaterialien, die sich durch die Hitze des Einbrennvorgangs sich zu rasch verflüchtigen würden, vermieden wird. Außerdem kann wie bereits erwähnt die Menge sowie die Dauer der Abführung des Trägermaterials auf das Glas bzw. die Einbrenntemperatur, beispielsweise bei einer Temperatur von 400 °C bis 700 °C abgestimmt werden. Insbesondere wird der Einbrennvorgang kontrolliert durchgeführt, sodass organische Bestandteile der Prozessfarbtinten ohne Bläschenbildung verdampfen und die auf die keramische Oberfläche oder das Glas aufgebrachte Struktur, das aufgebrachte Muster oder Bild, etc., in ihrem bzw. seinem Design unverändert bleibend schmilzt.

Die Trägerflüssigkeit selbst kann ein Alkohol sein, wie voranstehend beschrieben.

Im Folgenden werden nun einige bevorzugte Beispiele der erfindungsgemäßen Prozessfarbtinten beschrieben. Aufgrund der zahlreichen Möglichkeiten an erfindungsgemäßen Ausführungen seien hier nur exemplarisch einige Beispiele angeführt, da es sonst den Rahmen dieser Beschreibung sprengen würde. Die jeweiligen Anteile an den einzelnen Komponenten entsprechen den voranstehenden Ausführungen.

Die Ausführungsbeispiele zeigen somit nur einige mögliche Ausführungsvarianten, wobei an dieser Stelle bemerkt sei, dass die Erfindung nicht auf die speziell beschriebenen Beispiele eingeschränkt ist, sondern vielmehr auch diverse Kombinationen der einzelnen Ausführungsvarianten untereinander möglich sind. Diese Variationsmöglichkeiten liegen aufgrund der Lehre zum technischen Handeln durch gegenständliche Erfindung im Können des auf diesem technischen Gebiet tätigen Fachmanns.

### Beispiel 1:

Eine schwarze einbrennbaren Prozessfarbtinte bestehend aus den Trägerflüssigkeiten Polypropylenglykoldiacrylat, hochmolekularem Polyethylenglykol und 1,2-Propandiol, den Pigmenten CoCr₂0₄, CuCr₂0₄ und Co₃0₄, dem Frittenmaterial Bi₂0₃, Viskositätsreglern und dem Photoinitiator Irgacure 819^{®} wurde mit dem beschriebenen Verfahren auf Glas aufgedruckt und mittels UV-Licht fixiert. Die applizierte und vorfixierte Prozessfarbtinte wurde bei einer Temperatur von 700 °C eingebrannt.

### Beispiel 2:

Eine schwarze einbrennbaren Prozessfarbtinte bestehend aus den Trägerflüssigkeiten Polypropylenglykoldiacrylat, hochmolekularem Polyethylenglykol und 1,2-Propandiol, den Pigmenten CoCr₂0₄, CuCr₂0₄ und Co₃0₄, dem Frittenmaterial Bi₂0₃, Viskositätsreglern und dem thermischen Initiator 1,1'-Azobis(cyclohexancarbonitril) wurde mit dem beschriebenen Verfahren auf Glas aufgedruckt und mittels IR-Element fixiert. Die applizierte und vorfixierte Prozessfarbtinte wurde bei einer Temperatur von 650 °C bis 700 °C eingebrannt.

### Beispiel 3:

Eine blaue einbrennbaren Prozessfarbtinte bestehend aus den Trägerflüssigkeiten Polypropylenglykoldiacrylat, Epoxy-funktionalisiertem Polyethylenglykol und Hexandiol, dem Pigment CoA1₂0₄, einem Frittenmaterial mit Acrylat-Funktionalitäten (erhalten durch eine Silanisierungsreaktion des Frittenmaterials), Viskositätsreglern und dem UV-Initiator 2-Hydroxy-2-methylpropiophenon wurde mit dem beschriebenen Verfahren auf Glas und auf keramische Elemente aufgedruckt und mittels UV-Strahler fixiert. Die applizierte und vorfixierte Prozessfarbtinte wurde bei einer Temperatur von 650 °C bis 700 °C eingebrannt.

### Beispiel 4:

Eine schwarze einbrennbaren Prozessfarbtinte bestehend aus den Trägerflüssigkeiten Polypropylenglykoldiacrylat, hochmolekularem Polyethylenglykol, Cyclohexanon, Butanon und einer Mischung aus verschiedenen Kohlenwasserstoffen, den Pigmenten Fe₃0₄ und FeCr₂0₄, dem Frittenmaterial Bi₂O₃, Viskositätsreglern und dem Photoinitiator Irgacure 819^{®} wurde mit dem beschriebenen Verfahren auf Glas aufgedruckt und durch eine Kombination aus thermischer Behandlung und UV-Licht fixiert. Die applizierte und vorfixierte Prozessfarbtinte wurde bei einer Temperatur von 700 °C eingebrannt.

Die Ausführungsbeispiele zeigen mögliche Ausführungsvarianten der Vorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

### Bezugszeichenaufstellung

- 1: Vorrichtung
- 2: Transporteinrichtung
- 3: Druckteil
- 4: Vorschubrichtung
- 5: Druckkopfanordnung

- 6: Druckkopf
- 7: Förderband
- 8: Umlenkrolle
- 9: Führungsplatte
- 10: Führung

- 11: Bildrechner
- 12: Steuereinrichtung
- 13: Tank
- 14: Düsenspüleinrichtung
- 15: Reinigungseinrichtung

- 16: Sensor
- 17: Oberseite
- 18: Sensor
- 19: Vorderkante
- 20: Einrichtung

- 21: Kamera
- 22: Düsenreihe
- 23: Düsenreihenlänge
- 24: Druckbereichbreite
- 25: Druckkopfmodul

- 26: Druckkopfreihe
- 27: Druckbereichsbreite
- 28: Druckbereichslänge
- 29: Austragelement
- 30: Lichtquelle

- 31: Heizeinrichtung

## Patentansprüche

1. Verfahren zur Herstellung einer mehrfärbigen Oberfläche auf einem keramischen Element oder einem Glas durch tropfenförmiges Auftragen von unterschiedlich gefärbten, eine Trägerflüssigkeit enthaltenden, primären keramischen Prozessfarbtinten auf zumindest einen Teil einer Oberfläche des keramischen Elementes oder des Glases, wobei Mischfarben durch Übereinanderdrucken von zumindest zwei primären Prozessfarbtinten hergestellt werden, und anschließendes Einbrennen der aufgetragenen Tintentropfen, **dadurch gekennzeichnet, dass** den primären keramischen Prozessfarbtinten zumindest ein (photo)oligomerisierbares oder (photo)polymerisierbares Additiv und gegebenenfalls zumindest ein Photoinitiator zugesetzt und vor dem Überdrucken eines Tintentropfens mit einem weiteren Tintentropfen der Tintentropfen zumindest teilweise gehärtet wird und/oder dass das nach dem Auftragen eines Tintentropfens einer Prozessfarbtinte und bevor auf diesen Tintentropfen ein weiterer Tintentropfen einer Prozessfarbtinte aufgetragen wird, die Viskosität des davor aufgetragenen Tintentropfens erhöht wird.

2. Verfahren nach Anspruch 1, **dadurch gekennzeichnet, dass** das (photo)oligomerisierbare oder (photo)polymerisierbare Additiv des Tintentropfens vor dem Auftragen eines weiteren Tintentropfens darauf nur teilweise oligo- bzw. polymerisiert wird.

3. Verfahren nach Anspruch 2, **dadurch gekennzeichnet, dass** das (photo)oligomerisierbare oder (photo)polymerisierbare Additiv bis zum einem Ausmaß von maximal 90 % oligo- bzw. polymerisiert wird.

4. Verfahren nach einem der Ansprüche 1 bis 3, **dadurch gekennzeichnet, dass** ein Anteil der Trägerflüssigkeit von maximal 20 %, bezogen auf den Gesamtanteil der Trägerflüssigkeit an dem Tintentropfen, entfernt wird, bevor der nächste Tintentropfen auf diesen Tropfen aufgetragen wird.

5. Verfahren nach einem der Ansprüche 1 bis 4, **dadurch gekennzeichnet, dass** eine oligomerisierbare oder polymerisierbare Trägerflüssigkeit verwendet wird und diese nach dem Auftragen eines Tintentropfens in dem Tintentropfen oligomerisiert oder polymerisiert wird.

6. Verfahren nach einem der Ansprüche 1 bis 5, **dadurch gekennzeichnet, dass** das keramische Element oder das Glas in einem einzigen Durchgang durch eine Druckvorrichtung bedruckt wird, wobei in der Druckvorrichtung mehrere Austragelemente (29) für jeweils eine der primären keramischen Prozessfarbtinten hintereinander - in Vorschubrichtung (4) des keramischen Elementes bzw. des Glases betrachtet - angeordnet werden, und wobei die Trägerflüssigkeit der primären keramischen Prozessfarbtinten aus den aufgebrachten Tintentropfen nur teilweise entfernt wird, bevor auf die selbe Stelle ein weiterer Tintentropfen aufgebracht wird.

7. Verfahren nach einem der Ansprüche 1 bis 6, **dadurch gekennzeichnet, dass** für zumindest zwei der primären keramischen Prozessfarbtinten jeweils eine Trägerflüssigkeit verwendet wird, die bei unterschiedlichen Temperaturen verflüchtigbar sind.

8. Verfahren nach einem der Ansprüche 1 bis 7, **dadurch gekennzeichnet, dass** eine Trägerflüssigkeit verwendet wird, die aus einem Gemisch aus Flüssigkeiten mit unterschiedlichen Siedepunkten besteht.

9. Verfahren nach einem der Ansprüche 1 bis 8, **dadurch gekennzeichnet, dass** das keramische Element oder das Glas mit einem Tintenstrahldrucker bedruckt wird.

10. Drucktintensystem bestehend aus mehreren unterschiedlich gefärbten, primären keramischen Prozessfarbtinten, aus denen durch Übereinanderdrucken von zumindest zwei primären keramischen Prozessfarbtinten Mischfarben herstellbar sind, wobei jede der primären keramischen Prozessfarbtinten zumindest ein anorganisches Pigment, eine Fritte, ein Dispergiermittel und eine, insbesondere organische, Trägerflüssigkeit aufweist, **dadurch gekennzeichnet, dass** jede der primären keramischen Prozessfarbtinten zumindest ein (photo)oligomerisierbares oder (photo)polymerisierbares Additiv und gegebenenfalls zumindest einen Photoinitiator enthält.

11. Drucktintensystem nach Anspruch 10, **dadurch gekennzeichnet, dass** der Gesamtanteil an (photo)oligomerisierbaren oder (photo)polymerisierbaren Additiven an der jeweiligen primären keramischen Prozessfarbtinte ausgewählt ist aus einem Bereich mit einer unteren Grenze von 5Gew.-% und einer oberen Grenze von 70 Gew.-%.

12. Drucktintensystem nach Anspruch 10 oder 11, **dadurch gekennzeichnet, dass** der Gesamtanteil an Photoinitiatoren an der jeweiligen primären keramischen Prozessfarbtinte ausgewählt ist aus einem Bereich mit einer unteren Grenze von 0,5 Gew.-% und einer oberen Grenze von 20 Gew.-%.

13. Drucktintensystem nach einem der Ansprüche 10 bis 12, **dadurch gekennzeichnet, dass** die Trägerflüssigkeiten von zumindest zwei primären keramischen Prozessfarbtinten einen zueinander unterschiedlichen Siedepunkt aufweisen.

14. Drucktintensystem nach einem der Ansprüche 10 bis 13, **dadurch gekennzeichnet, dass** die Trägerflüssigkeiten der primären keramischen Prozessfarbtinten aus einem Gemisch aus Flüssigkeiten mit unterschiedlichen Siedepunkten bestehen.

15. Drucktintensystem nach einem der Ansprüche 10 bis 14, **dadurch gekennzeichnet, dass** der Anteil der Trägerflüssigkeit an den primären keramischen Prozessfarbtinten ausgewählt ist aus einem Bereich mit einer unteren Grenze von 30 Gew.-% und einer oberen Grenze von 90 Gew.-%.

16. Drucktintensystem nach einem der Ansprüche 10 bis 15, **dadurch gekennzeichnet, dass** zumindest zwei der primären keramischen Prozessfarbtinten einen unterschiedlichen Anteil an Trägerflüssigkeit aufweisen.

17. Drucktintensystem nach einem der Ansprüche 10 bis 16, **dadurch gekennzeichnet, dass** zumindest ein Teil der Trägerflüssigkeit das (photo)oligomerisierbare oder (photo)polymerisierbare Additiv bildet.

18. Vorrichtung (1) zur Herstellung einer mehrfärbigen Oberfläche auf einem keramischen Element oder einem Glas durch tropfenförmiges Auftragen von unterschiedlich gefärbten, primären keramischen Prozessfarbtinten auf zumindest einen Teil einer Oberfläche des keramischen Elementes oder des Glases, wobei Mischfarben durch Übereinanderdrucken von zumindest zwei primären Prozessfarbtinten hergestellt werden, umfassend mehrere Austragelemente (29) für die Prozessfarbtinten und eine Stützeinrichtung zur Ablage des keramischen Elements oder des Glases während des Auftragens der Prozessfarbtinten, **dadurch gekennzeichnet, dass** am oder benachbart zu den oder zu einer Gruppe von Austragelementen (29) eine Lichtquelle (30) angeordnet ist und/oder dass die Austragelemente (29) in mehreren Druckköpfen (6) angeordnet sind und zwischen den Druckköpfen (6) eine Heizeinrichtung (31) angeordnet ist.

19. Vorrichtung nach Anspruch 18, **dadurch gekennzeichnet, dass** diese ein Tintenstrahldrucker ist.
